# EUROPEAN PATENT APPLICATION

(11) **EP 4 290 070 A1**
(43) Date of publication of application: **13.12.2023**
(21) Application number: 22177734.5
(22) Date of filing: 08.06.2022
(51) Int. Cl.: F03D 1/06, F03D 7/02, F03D 80/70

(54) **PITCH BEARING COMPRISING A COVER PLATE**

(71) Applicant: Siemens Gamesa Renewable Energy A/S, 7330 Brande (DK)
(72) Inventor: Jespersen, Kim Stave Holm, 8700 Horsens (DK)
(74) Representative: SGRE-Association

(57) **Abstract**

The invention relates to a pitch bearing for a wind turbine configured to rotate a rotor blade of said wind turbine about a longitudinal axis comprising
a base plate (11), a pitch drive system (1) comprising an actuator (2) coupled to the base plate (11), and at least one reinforcement plate (12) axially arranged between the actuator (2) and the base plate (11). According to the invention, the pitch drive system (1) is configured to adjust a pitch angle of said pitch bearing by rotating the base plate (11) about the longitudinal axis, wherein the at least one reinforcement plate (12) comprises a center hole (13) for allowing a movement of the actuator (2) for adjusting the pitch angle. According to the invention, the pitch bearing further comprises a cover plate (14) to cover the center hole (13).

## Description

The present invention relates to a pitch bearing for a wind turbine comprising a cover plate. The present invention further relates to a wind turbine comprising said pitch bearing.

Wind turbines are increasingly used for the generation of electrical energy. A wind turbine comprises a tower and a nacelle mounted on the tower, to which a hub is attached. A rotor is mounted at the hub and coupled to a generator. A plurality of blades extends from the rotor. The blades are oriented in such a way that wind passing over the blades turns the rotor, thereby driving the generator. Hence, the rotational energy of the blades is transferred to the generator, which then converts the mechanical energy into electricity and transfers the electricity to the electrical grid.

The blades are connected to the hub of the rotor in a way that they can be rotated around their longitudinal axis. Thus, the blades can perform a pitch movement relative to the hub. The pitch movement is needed to control the rotational speed of the rotor and the performance of the wind turbine. The pitch movement is achieved by means of a pitch drive system.

As wind turbines become larger and consequently the rotor blades and the hub become larger the forces which are transferred from the rotor blade to the generator via the hub increase as well. Thus, a reinforcement of the hub is advantageous. The pitch bearings are particularly prone to deformations. Thus, reinforcement plates are installed at the pitch bearings to mitigate this effect.

Document EP2933476A1 shows the reinforcement with reinforcement plates of the pitch bearings installed at the hub. These reinforcement plates are arranged in such a way that they build a sandwich-type structure with the bearing ring. The reinforcement plates improve the stiffness of the hub and mitigate the impact of the forces transferred by the hub on the structure of the hub.

Arranging reinforcement plates at a pitch bearing requires that the reinforcement plates comprise a center hole for the components of the pitch drive system to be able to move, thereby rotating the blades. Such a center hole creates a risk in the hub where workers can get injured due to the step between the base plate attached to the pitch drive system and each reinforcement plate.

In addition, by having an opening at the reinforcement plates, oil, grease, or loose objects from the hub can enter the rotor blade, or vice versa.

It is an object of the invention to provide a pitch bearing comprising a pitch drive system and at least a reinforcement plate which overcomes the problems known from the prior art.

This is achieved by a pitch bearing according to claim 1 and by a wind turbine comprising said pitch bearing according to claim 15.

According to the invention, a pitch bearing for a wind turbine configured to rotate a rotor blade of said wind turbine about a longitudinal axis comprises a base plate, a pitch drive system and at least one reinforcement plate axially arranged between the actuator and the base plate.

The pitch drive system comprises an actuator coupled to the base plate to adjust a pitch angle of the pitch bearing by rotating the base plate about the longitudinal axis. The actuator drives the pitch motion. Different actuators are known in the art, such as electrical, hydraulic, or even electromagnetic.

The actuator can be coupled at its one end to the hub and at its other end to the base plate by means of a connection pin. The connection pin can be erected at the base plate where the end of the actuator is attached.

According to the invention, the at least one reinforcement plate comprises a center hole for allowing a movement of the actuator for adjusting the pitch angle. The reinforcement plate can be a stationary plate coupled to the hub structure. With stationary it is meant that the base plate of the pitch bearing rotates with respect to the reinforcement plate and, therefore, with respect to the hub structure.

According to the invention, the pitch bearing further comprises a cover plate to cover the center hole.

The cover plate closes the space between the base plate and the reinforcement plate to prevent oil, grease or loose objects from the hub to enter the rotor blade, or vice versa. It also prevents injuries of workers which might trip due to the step originated from an open center hole.

The base plate can be connected to one bearing ring of the pitch bearing, as well as to the rotor blade and thus be rotatable together with the rotor blade with respect to the hub. When the actuator drives the pitching movement, the linear movement is transferred to the connection pin, resulting in a rotational movement of the base plate in respect to the hub. This rotation results in a change or adjustment of the pitch angle of the pitch bearing. To allow the actuator, which is usually a hydraulic cylinder, to expand, the reinforcement plate comprises a center hole, which is an opening at the center of the reinforcement plate.

According to a preferred embodiment of the invention, the pitch bearing comprises a plurality of reinforcement plates axially arranged between the actuator and the base plate, wherein each reinforcement plate comprises a center hole for allowing a movement of the actuator for adjusting the pitch angle, wherein the cover plate is arranged at the reinforcement plate axially closer to the actuator.

Depending on the loads or even the pitch bearing configuration (height, coning angle, etc.), further reinforcement plates can be added. This allows to increase the stiffness of the structure.

According to another preferred embodiment of the invention, the pitch bearing further comprises a plurality of cover plates, each cover plate being arranged at each center hole of each reinforcement plate.

By having more cover plates, the base plate and the bearing coupled to the base plate can be protected to prevent oil, grease, or loose objects from the hub to enter the rotor blade, or vice versa.

According to another preferred embodiment of the invention, the actuator is a hydraulic actuator.

The pitch bearing can comprise one or more actuator hydraulic pumps adapted for powering the hydraulic actuator. The one or more actuator hydraulic pumps can be powered by a normal operation energy source. The pitch bearing can further comprise an emergency hydraulic pump also adapted for powering the hydraulic actuators, the emergency hydraulic pump being powered by an electrical energy storage.

According to another preferred embodiment of the invention, the base plate is a reinforced plate.

Having the base plate reinforced increases the stiffness of the blade bearing.

According to another preferred embodiment of the invention, the pitch bearing further comprises a seal between the cover plate and the reinforcement plate.

The seal can seal the cover plate and the reinforcement plate in a liquid tight manner. This blocks water and dirt from entering and accumulating between the reinforcement plates.

According to another preferred embodiment of the invention, the pitch bearing further comprises a support attached at the reinforcement plate configured to support the cover plate. A support allows an easier coupling of the cover plate to the reinforcement plate.

According to another preferred embodiment of the invention, a sliding means is arranged between the support and the cover plate for allowing a rotation of the cover plate. The sliding means can comprise a sliding material and/or a sliding surface and a plurality of sliding pads.

The cover plate can thus be coupled to the pitch drive system, in particular to the connection pin of the pitch drive system and rotate together with the base plate so that the center hole is sealed. The reinforcement plate and the cover plate can build a sealed surface and the cover plate rotates with the movement of the actuators with respect to the reinforcement plate, which is stationary as it is attached to the structure of the hub.

According to another preferred embodiment of the invention, the pitch bearing further comprises a rail for allowing a rotation of the cover plate.

The rail allows the rotation of the cover plate with respect to the reinforcement plate. Wheels or rollers attached to the cover plate can rotate on the rail, which can be attached to the support at the reinforcement plate or directly at the reinforcement plate.

According to another preferred embodiment of the invention, the cover plate is coupled to the connection pin by coupling means.

The coupling means can couple the cover plate to the connection pin by a semi-permanent joining method. For example, the cover plate can be coupled to the connection pin by a nut-bolt connection.

The coupling means can be a bolt, screw, pin, rivet, thread, stud or other longitudinal fastener used for fastening the cover plate to the connection pin.

According to another preferred embodiment of the invention, the coupling means are bolts.

According to another preferred embodiment of the invention, the cover plate is divided into at least two parts.

Dividing the cover plate into multiple parts makes the transportation of the cover plate and its assembly easier.

According to another preferred embodiment of the invention, the pitch bearing further comprises a bracket for avoiding that the cover plate falls inside the center hole.

The bracket holds the cover plate in place and can be attached to the support or to the reinforcement plate.

According to another preferred embodiment of the invention, the pitch bearing further comprises a plurality of brackets.

With a plurality of brackets, a tilting of the cover plate can be avoided, as they also provide a support for the cover plate.

Yet another aspect of the invention relates to a wind turbine comprising a pitch bearing for a wind turbine configured to rotate about a longitudinal axis, wherein the pitch bearing comprises a base plate, a pitch drive system and at least a reinforcement plate axially arranged between the actuator and the base plate. The pitch drive system comprises an actuator coupled to the base plate to adjust a pitch angle of the pitch bearing by rotating the base plate about the longitudinal axis. The at least one reinforcement plate comprises a center hole for allowing a movement of the actuator for adjusting the pitch angle. The pitch bearing further comprises a cover plate to cover the center hole.

In order to facilitate the understanding of the characteristics of the invention and being an integral part of this specification, some drawing sheets are attached on which figures, with an illustrative but not limiting character, the following is represented:
Figure 1 shows a pitch drive system for a rotor blade.
Figure 2 shows a detailed view of the steps resulting from the absence of a cover at the center hole of reinforcement plates
Figures 3 to 5 shows a sealed cover plate according to one embodiment of the invention.
Figure 6 shows the sealed cover plate according to another embodiment of the invention.
Figure 7 shows the coupling of the cover plate to the connection pin.
Figure 8 shows a bracket supporting the cover plate.
Figures 9 and 10 show the pitching movement.

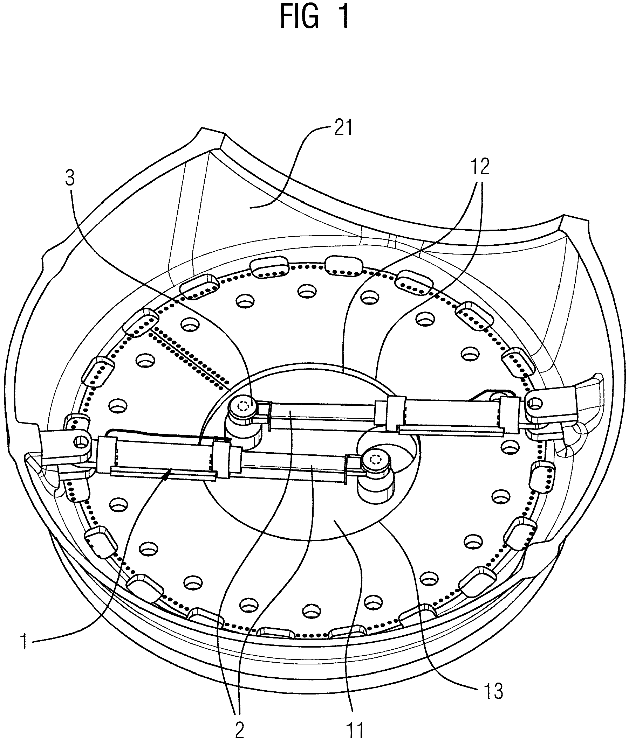

Figure 1 shows a pitch drive system 1 for a rotor blade. The pitch drive system 1 comprises an actuator 2 which is a hydraulic cylinder that is at its one end connected to the hub 21 and at its other end connected to the base plate 11 by means of a connection pin 3. The connection pin 3 is erected at the base plate 11 where the end of the actuator 2 is attached.

The base plate 11 can be a reinforced plate. The base plate 11 is connected to one bearing ring of the pitch bearing, as well as to the rotor blade and is rotatable together with the rotor blade with respect to the hub 21. When the hydraulic cylinder expands, the linear movement is transferred to the connection pin 3, resulting in a rotational movement of the base plate 11 in respect to the hub 21. This rotation results in a change or adjustment of the pitch angle of the pitch bearing.

The pitch bearing further comprises two reinforcement plates 12 arranged between the hydraulic cylinder and the base plate 11. To allow the hydraulic cylinder to expand, the reinforcement plates 12 comprise a center hole 13 each, which is an opening at the center of the reinforcement plates 12.

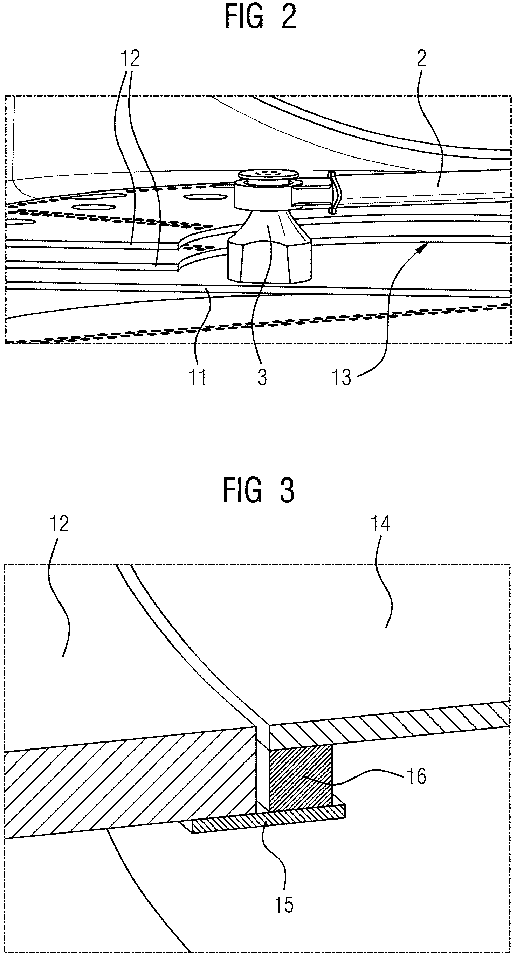

In this figure, the center hole 13 of the reinforcement plates 12 is open. Open center holes 13 are a risk in the hub 21 for workers, which can get injured due to the step between the base plate 11 attached to the pitch drive system 1 and each reinforcement plate 12. The two steps resulting from the center holes 13 of each reinforcement plate 12 are shown in more detail in Figure 2.

Figure 3 shows the center hole 13 in the reinforcement plate 12 covered by a cover plate 14. The cover plate 14 closes the space of the rotor blade in respect to the hub 21 to prevent oil, grease, or loose objects from the hub to enter the rotor blade, or vice versa. The cover plate 14 also prevents having a step between the base plate 11 and the reinforcement plate 12, thereby preventing injuries of workers.

In Figure 3, the cover plate 14 is a sealed plate. The cover plate 14 seals the space within the rotor blade and thus prevents the movement of spill oil, grease, or loose objects from the rotor blade into the hub 21 of the wind turbine, or vice versa.

A sliding means 16 can be arranged between a support 15 attached at the reinforcement plate 12 and the cover plate 14. In this embodiment, the cover plate 14 can thus be coupled to the connection pin 3 of the pitch drive system 1 and rotate together with the base plate 11 so that the center hole 13 is sealed.

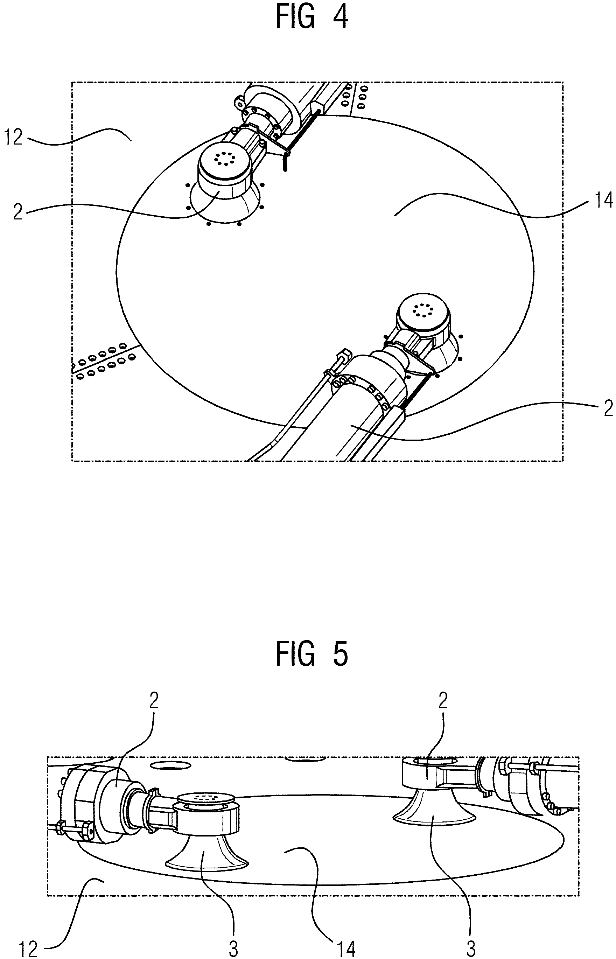

Figure 4 shows the sealed cover plate 14 from a top view. The reinforcement plate 12 and the cover plate 14 build a sealed surface and the cover plate 14 rotates with the movement of the actuators 2 with respect to the reinforcement plate 12, which is stationary as it is attached to the structure of the hub 21.

Figure 5 shows a detailed view of the connection pins 3, which are coupled to the actuators 2 as well as to the cover plate 14.

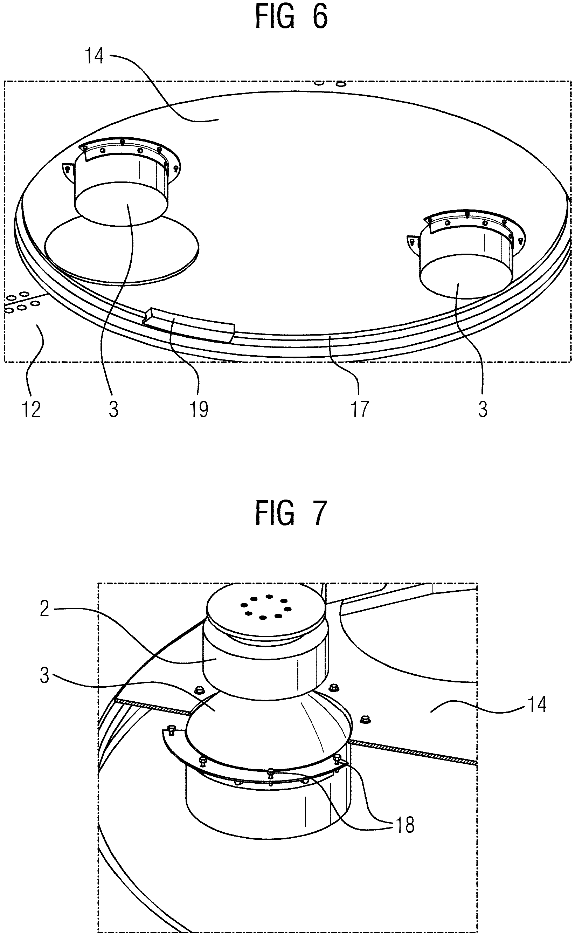

Figure 6 shows the sealed cover plate 14 according to another embodiment of the invention from a bottom view, i.e., a view as seen from the base plate 11. The cover plate 14 is rotatably coupled to the reinforcement plate 12 by means of a rail 17, which allows the rotation of the cover plate 14 with respect to the reinforcement plate 12. In addition, a bracket 19 supports the cover plate 14 to avoid that the cover plate 14 falls inside the center hole 13.

Figure 7 shows the coupling of the cover plate 14 to the connection pin 3. For the coupling, a plurality of coupling means 18 are used. The coupling means 18 can also be seen in Figure 6. In addition, both Figure 6 and 7 show a cover plate 14 divided in the middle, thus comprising two parts.

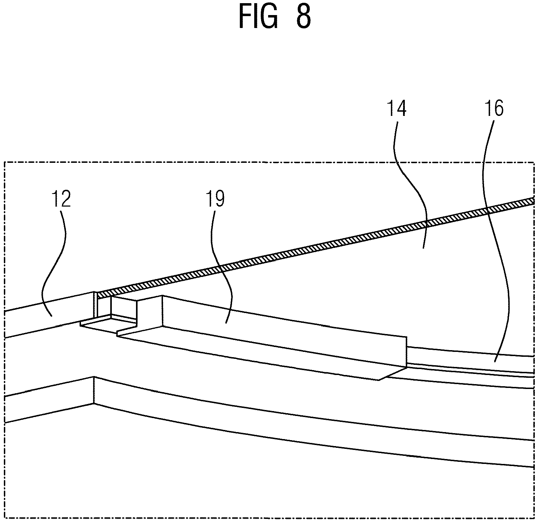

Figure 8 shows a detailed view of a bracket 18 coupled between the support 15 and the cover plate 14 to avoid that the cover plate 14 falls inside the center hole 13. The figure also shows that the cover plate 14 slides on a sliding means 16.

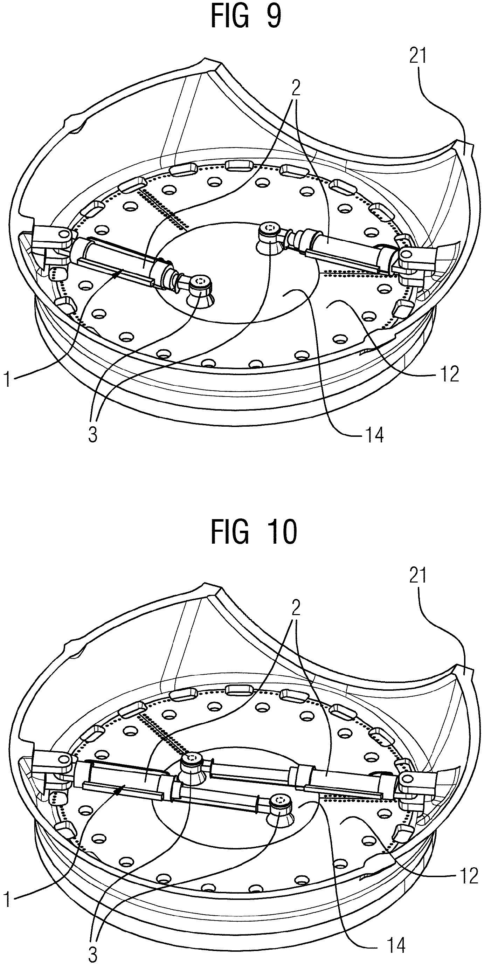

Figures 9 and 10 show the pitching movement. During pitching, the actuators 2 rotate the base plate 11 (not shown in the Figures), thereby rotating the rotor blades coupled to the base plate 11. The cover plate 14 is also coupled to the connection pin 3 of the pitch drive system 1, so the extension of the actuator 1 results in a rotation of the cover plate 14 with respect to the reinforcement plate 12.

### Reference numbers

- 1: Pitch drive system
- 2: Actuator
- 3: Connection pin
- 11: Base plate
- 12: Reinforcement plate
- 13: Center hole
- 14: Cover plate
- 15: Support
- 16: Sliding means
- 17: Rail
- 18: Coupling means
- 19: Bracket
- 21: Hub

## Claims

1. A pitch bearing for a wind turbine configured to rotate a rotor blade of said wind turbine about a longitudinal axis comprising
a base plate (11),
a pitch drive system (1) comprising an actuator (2) coupled to the base plate (11), and
at least one reinforcement plate (12) axially arranged between the actuator (2) and the base plate (11),
wherein said pitch drive system (1) is configured to adjust a pitch angle of said pitch bearing by rotating the base plate (11) about the longitudinal axis,
wherein the at least one reinforcement plate (12) comprises a center hole (13) for allowing a movement of the actuator (2) for adjusting the pitch angle,
**characterized in that**
said pitch bearing further comprises a cover plate (14) to cover the center hole (13).

2. The pitch bearing according to claim 1, wherein said pitch bearing comprises a plurality of reinforcement plates (12) axially arranged between the actuator (2) and the base plate (11), wherein each reinforcement plate (12) comprises a center hole (13) for allowing a movement of the actuator (2) for adjusting the pitch angle, wherein the cover plate (14) is arranged at the reinforcement plate (12) axially closer to the actuator (2).

3. The pitch bearing according to claim 2, wherein said pitch bearing further comprises a plurality of cover plates (14), each cover plate (14) being arranged at each center hole (13) of each reinforcement plate (12).

4. The pitch bearing according to any of the preceding claims, wherein the actuator (2) is a hydraulic actuator.

5. The pitch bearing according to any of the preceding claims, wherein the base plate (11) is a reinforced plate.

6. The pitch bearing according to any of the preceding claims, wherein said pitch bearing further comprises a seal between the cover plate (14) and the reinforcement plate (12) .

7. The pitch bearing according to any of the preceding claims, wherein said pitch bearing further comprises a support (15) attached at the reinforcement plate (12) configured to support the cover plate (14).

8. The pitch bearing according to claim 7, wherein a sliding means (16) is arranged between the support (15) and the cover plate (14) for allowing a rotation of the cover plate (14).

9. The pitch bearing according to claim 7, wherein said pitch bearing further comprises a rail (17) for allowing a rotation of the cover plate (14).

10. The pitch bearing according to claim 8 or 9, wherein the cover plate (14) is coupled to the connection pin (3) by coupling means (18).

11. The pitch bearing according to claim 10, wherein the coupling means (18) are bolts.

12. The pitch bearing according to any of the preceding claims, wherein the cover plate (14) is divided into at least two parts.

13. The pitch bearing according to any of the preceding claims, wherein said pitch bearing further comprises a bracket (19) for avoiding that the cover plate (14) falls inside the center hole (13).

14. The pitch bearing according to claim 13, wherein said pitch bearing further comprises a plurality of brackets (19).

15. A wind turbine comprising a pitch bearing according to any of the preceding claims.
